# EUROPEAN PATENT APPLICATION

(11) **EP 4 712 563 A1**
(43) Date of publication of application: **18.03.2026**
(21) Application number: 23936094.4
(22) Date of filing: 10.05.2023
(51) Int. Cl.: H04W 36/08

(54) **INFORMATION ACQUISITION METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2023/093346
(87) International publication number: WO 2024/229773

(57) **Abstract**

Disclosed in the embodiments of the present disclosure are an information acquisition method and apparatus, which can be applied to the technical field of communications. The method, which is executed by an ATG terminal device, comprises: receiving indication information sent by a network-side device, wherein the indication information comprises at least one piece of the following pieces of information: first position information of a serving cell, second position information of a neighbor cell, and scheduling offset information, By means of the method, an ATG terminal device can acquire at least one piece of the following pieces of information: first position information of a serving cell, second position information of a neighbor cell, and scheduling offset information, such that time-frequency compensation is autonomously performed, thereby guaranteeing the reliability of communication.

## Description

### TECHNICAL FIELD

The disclosure relates to the field of communication technologies, and in particular to a method and an apparatus for obtaining information.

### BACKGROUND

An air-to-ground (ATG) terminal is a special terminal, such as an aircraft or a passenger terminal. The aircraft uses a fifth generation (5G) air interface to communicate with a network device, and the aircraft uses a wireless fidelity (Wi-Fi) interface to communicate with a passenger terminal. A link between the ATG terminal and the network device is regarded as a service link.

### SUMMARY

Embodiments of the disclosure provide a method and an apparatus for obtaining information, which enable an air-to-ground (ATG) terminal to obtain at least one of first location information of a serving cell, second location information of a neighboring cell, or scheduling offset information, so as to autonomously perform time and frequency compensation, thus ensuring communication reliability.

In a first aspect, embodiments of the disclosure provide a method for obtaining information. The method is performed by an ATG terminal, including: receiving indication information sent by a network device, in which the indication information includes at least one of: first location information of a serving cell; second location information of a neighboring cell; or scheduling offset information.

In the technical solution, the ATG terminal receives the indication information sent by the network device, in which the indication information includes at least one of the first location information of the serving cell, the second location information of the neighboring cell, or the scheduling offset information. Thus, the ATG terminal may obtain at least one of the first location information of the serving cell, the second location information of the neighboring cell, or the scheduling offset information, so as to autonomously perform time and frequency compensation, thus ensuring communication reliability.

In a second aspect, embodiments of the disclosure provide a method for obtaining information. The method is performed by a network device, including: sending indication information to an ATG terminal, in which the indication information includes at least one of: first location information of a serving cell; second location information of a neighboring cell; or scheduling offset information.

In a third aspect, embodiments of the disclosure provide a communication device. The communication device has a function of realizing some or all of the functions of the ATG terminal in the method described in the first aspect. For example, the functions of the communication device may have the functions in some or all embodiments of the disclosure, or may have functions of implementing any one of the embodiments in the disclosure alone. The functions may be realized by hardware or by hardware executing corresponding software. The hardware or software includes one or more units or modules corresponding to the functions described above.

In an implementation, a structure of the communication device may include a transceiver module and a processing module. The processing module is configured to support the communication device to execute the functions in the method described above. The transceiver module is configured to support communications between the communication device and other devices. The communication device may further include a storage module coupled with the transceiver module and the processing module, which stores necessary computer programs and data for the communication device.

In an implementation, the communication device includes: a transceiver module, configured to receive indication information sent by a network device, in which the indication information includes at least one of: first location information of a serving cell; second location information of a neighboring cell; or scheduling offset information.

In a fourth aspect, embodiments of the disclosure provide another communication device. The communication device has a function of realizing some or all of the functions of the network device in the method described in the second aspect. For example, the functions of the communication device may have the functions in some or all embodiments of the disclosure, or may have the functions of implementing any one of the embodiments in the disclosure alone. The functions may be realized by hardware or by hardware executing corresponding software. The hardware or software includes one or more units or modules corresponding to the functions described above.

In an implementation, a structure of the communication device may include a transceiver module and a processing module. The processing module is configured to support the communication device to execute the functions in the method described above. The transceiver module is configured to support communications between the communication device and other devices. The communication device may further include a storage module coupled with the transceiver module and the processing module, which stores necessary computer programs and data for the communication device.

In an implementation, the communication device includes: a transceiver module, configured to send indication information to an ATG terminal, in which the indication information includes at least one of: first location information of a serving cell; second location information of a neighboring cell; or scheduling offset information.

In a fifth aspect, embodiments of the disclosure provide a communication device. The communication device includes a processor. When the processor calls a computer program in a memory, the method as described in the first aspect is performed.

In a sixth aspect, embodiments of the disclosure provide a communication device. The communication device includes a processor. When the processor calls a computer program in a memory, the method as described in the second aspect is performed.

In a seventh aspect, embodiments of the disclosure provide a communication device. The communication device includes a processor and a memory. The memory is stored with a computer program; and the processor is configured to execute the computer program stored in the memory, so that the communication device performs the method as described in the first aspect.

In an eighth aspect, embodiments of the disclosure provide a communication device. The communication device includes a processor and a memory. The memory is stored with a computer program; and the processor is configured to execute the computer program stored in the memory, so that the communication device performs the method as described in the second aspect.

In a ninth aspect, embodiments of the disclosure provide a communication device. The communication device includes a processor and an interface circuit. The interface circuit is configured to receive code instructions and transmit the code instructions to the processor; and the processor is configured to run the code instructions, so that the communication device performs the method as described in the first aspect.

In a tenth aspect, embodiments of the disclosure provide a communication device. The communication device includes a processor and an interface circuit. The interface circuit is configured to receive code instructions and transmit the code instructions to the processor; and the processor is configured to run the code instructions, so that the communication device performs the method as described in the second aspect.

In an eleventh aspect, embodiments of the disclosure provide a system for obtaining information. The system includes the communication device as described in the third aspect and the communication device as described in the fourth aspect, or the system includes the communication device as described in the fifth aspect and the communication device as described in the sixth aspect, or the system includes the communication device as described in the seventh aspect and the communication device as described in the eighth aspect, or the system includes the communication device as described in the ninth aspect and the communication device as described in the tenth aspect.

In a twelfth aspect, embodiments of the disclosure provide a computer-readable storage medium. The computer-readable storage medium is configured to store instructions used by an ATG terminal. When the instructions are executed, the ATG terminal performs the method as described in the first aspect.

In a thirteenth aspect, embodiments of the disclosure provide a computer-readable storage medium. The computer-readable storage medium is configured to store instructions used by a network device. When the instructions are executed, the network device performs the method as described in the second aspect.

In a fourteenth aspect, embodiments of the disclosure provide a computer program product including a computer program. When the computer program is running on a computer, the computer is caused to perform the method as described in the first aspect.

In a fifteenth aspect, embodiments of the disclosure provide a computer program product including a computer program. When the computer program is running on a computer, the computer is caused to perform the method as described in the second aspect.

In a sixteenth aspect, embodiments of the disclosure provide a chip system. The chip system includes at least one processor and an interface, and is configured to support an ATG terminal to perform functions involved in the first aspect, for example, to determine or process at least one of data or information involved in the above methods. In a possible design, the chip system further includes a memory. The memory is configured to save a necessary computer program and data for the ATG terminal. The chip system may be constituted by a chip, or may include a chip and other discrete devices.

In a seventeenth aspect, embodiments of the disclosure provide a chip system. The chip system includes at least one processor and an interface, and is configured to support a network device to perform functions involved in the second aspect, for example, to determine or process at least one of data or information involved in the above methods. In a possible design, the chip system further includes a memory. The memory is configured to save a necessary computer program and data for the network device. The chip system may be constituted by a chip, or may include a chip and other discrete devices.

In an eighteenth aspect, embodiments of the disclosure provide a computer program. When the computer program is running on a computer, the computer is caused to perform the method as described in the first aspect.

In a nineteenth aspect, embodiments of the disclosure provide a computer program. When the computer program is running on a computer, the computer is caused to perform the method as described in the second aspect.

### BRIEF DESCRIPTION OF THE DRAWINGS

In order to explain technical solutions in the embodiments of the disclosure or the related art more clearly, the drawings needed for use in the embodiments of the disclosure or in the related art are briefly introduced below.
FIG. 1 is a diagram illustrating an architecture of a communication system according to an embodiment of the disclosure.
FIG. 2 is a schematic diagram illustrating an air-to-ground (ATG) scenario according to an embodiment of the disclosure.
FIG. 3 is a flow chart illustrating a method for obtaining information according to an embodiment of the disclosure.
FIG. 4 is a flow chart illustrating a method for updating information according to an embodiment of the disclosure.
FIG. 5 is a flow chart illustrating a method for timing advance (TA) reporting according to an embodiment of the disclosure.
FIG. 6 is a flow chart illustrating a method for TA reporting according to an embodiment of the disclosure.
FIG. 7 is a flow chart illustrating a method for TA reporting according to an embodiment of the disclosure.
FIG. 8 is a flow chart illustrating a method for configuring information according to an embodiment of the disclosure.
FIG. 9 is a flow chart illustrating a method for obtaining information according to an embodiment of the disclosure.
FIG. 10 is a flow chart illustrating a method for TA reporting according to an embodiment of the disclosure.
FIG. 11 is a flow chart illustrating a method for TA reporting according to an embodiment of the disclosure.
FIG. 12 is a flow chart illustrating a method for TA reporting according to an embodiment of the disclosure.
FIG. 13 is a flow chart illustrating a method for configuring information according to an embodiment of the disclosure.
FIG. 14 is a block diagram illustrating a communication device according to an embodiment of the disclosure.
FIG. 15 is a block diagram illustrating a communication device according to an embodiment of the disclosure.
FIG. 16 is a block diagram illustrating a chip according to an embodiment of the disclosure.

### DETAILED DESCRIPTION

In order to better understand a method and an apparatus for obtaining information in embodiments of the disclosure, a communication system to which embodiments of the disclosure are applicable is described below.

Embodiments of the disclosure are described in detail below, and examples of the embodiments are illustrated in the accompanying drawings, throughout which the same or similar symbols indicate the same or similar components or components with the same or similar functions. The embodiments described below with reference to the accompanying drawings are exemplary and are intended to be used to explain the disclosure and are not to be construed as a limitation of the disclosure.

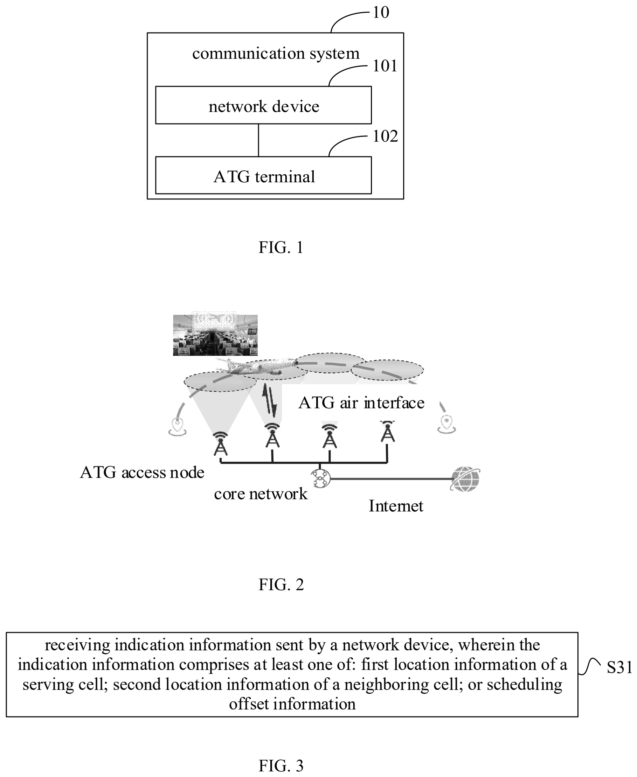

FIG. 1 is a diagram illustrating an architecture of a communication system according to an embodiment of the disclosure. The communication system may include, but is not limited to, one network device and one air-to-ground (ATG) terminal. The number and forms of the devices illustrated in FIG. 1 are only for example and do not constitute a limitation to embodiments of the disclosure, and two or more network devices and two or more ATG terminals may be included in practical applications. The communication system illustrated in FIG. 1 includes one network device 101 and one ATG terminal 102, for example.

It needs to be noted that the technical solution in embodiments of the disclosure is applicable to various communication systems, such as a long-term evolution (LTE) system, a 5th generation (5G) mobile communication system, a 5G new radio (NR) system, or other future new mobile communication systems.

The network device 101 in embodiments of the disclosure is an entity, at a network side, for transmitting or receiving a signal. For example, the network device 101 may be an evolved NodeB (eNB), a transmission reception point (TRP), a next generation NodeB (gNB) in a NR system, a base station in other future mobile communication systems, an access node in a wireless fidelity (Wi-Fi) system, or the like. A specific technology and a specific device form adopted by the network device 101 are not limited in embodiments of the disclosure. The network device 101 according to embodiments of the disclosure may consist of a central unit (CU) and distributed units (DUs). The CU may also be referred to as a control unit. The protocol layers of the network device 101 may be split by using a structure of the CU-DU, so that the functions for a part of the protocol layers are placed in the CU for central control, and functions of a part of or all of the remaining protocol layers are distributed in the DUs, and the DUs are centrally controlled by the CU.

The ATG terminal 102 in embodiments of the disclosure is an entity, at a user side, for receiving or transmitting a signal, such as a mobile phone. The ATG terminal may be referred to as a user equipment (UE), a mobile station (MS), a mobile terminal (MT), etc. The ATG terminal may be a device with a communication function, such as a vehicle, a smart vehicle, a mobile phone, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc. A specific technology and a specific device form adopted by the ATG terminal are not limited in embodiments of the disclosure.

It may be understood that, the communication system described in embodiments of the disclosure is intended to explain technical solutions of embodiments of the disclosure more clearly, and does not constitute a limitation to the technical solutions provided by embodiments of the disclosure. Those skilled in the art may know that, with evolution of a system architecture and emergence of a new service scenario, the technical solutions provided in embodiments of the disclosure are also applicable to similar technical problems.

In addition, the following points are explained to facilitate understanding of the embodiments of the disclosure.

First, in embodiments of the disclosure, "indicating" may include directly indicating and indirectly indicating. When describing that certain information indicates A, it may include that the information carries A, or the information directly or indirectly indicates A, which does not necessarily mean that A is carried in the information.

The information indicated by the information is referred to as information to be indicated. In an implementation, there are a plurality of ways to indicate the information to be indicated, including but not limited to: directly indicating the information to be indicated, such as the information to be indicated itself or an index of the information to be indicated; or indirectly indicating the information to be indicated by indicating other information, in which an association relationship exists between the other information and the information to be indicated; or indicating only a part of the information to be indicated, while other parts of the information to be indicated are known or pre-agreed. For example, indication of specific information may be implemented by utilizing a pre-agreed arrangement order of various information (e.g., defined by a protocol), thus reducing an indication overhead to some extent.

The information to be indicated may be sent as a whole or divided into a plurality of pieces of sub-information and sent separately. Further, transmission periods and/or transmission occasions of these pieces of sub-information may be the same or different. Transmission methods are not limited in the disclosure. The transmission periods and/or transmission occasions of these pieces of sub-information may be predefined, for example, predefined based on a protocol.

Second, in the embodiments illustrated below, first, second, and various numerical labels (e.g., #1, #2) are merely for convenience of description, but are not intended to limit the scope of the embodiments of the disclosure. For example, in embodiments of the disclosure, first and second may be used in the case of distinguishing types, and not used in the case of distinguishing the content of objects.

Third, "protocol" referred to in the embodiments of the disclosure may mean a standard specification in the field of communications, for example, including LTE protocols, NR protocols, Wireless Local Area Network (WLAN) protocols and related protocols applied in other communication systems, which is not limited in the disclosure.

Fourth, the term "at least one" refers to one or more, and the term "a plurality of' refers to two or more than two. The term "and/or" describes an association relationship of associated objects, indicating that there may be three types of relationships. For example, A and/or B may indicate: A exists alone, A and B exist simultaneously, or B exists alone, where A and B may be singular or plural. The character "/" generally indicates that the associated objects before and after this character are in an "or" relationship. The term "at least one" or similar expressions refer to any combination of these items, including a single item or a combination of a plurality of items. For example, at least one of a, b, and c may represent: a, b, c, a & b, a & c, b & c, or a & b & c, where a, b, and c may be single or multiple.

Fifth, embodiments of the disclosure enumerate a plurality of implementations to provide a clear illustration of the technical solutions of embodiments of the disclosure. Those skilled in the art may understand that the plurality of implementations provided in the embodiments of the disclosure may be performed individually, may be performed together with the methods of other implementations in the embodiments of the disclosure in combination, and may be performed individually or in combination with a number of methods in other related technologies. The embodiments of the disclosure do not limit this.

The ATG terminal is a special terminal, such as an aircraft or a passenger terminal. The aircraft uses a 5G air interface to communicate with a network device, and the aircraft uses a Wi-Fi interface to communicate with a passenger terminal. A link between the ATG terminal and the network device is regarded as a service link.

As shown in FIG. 2, in an ATG scenario, a network device (for example, a core network device) provides an ATG interface (for example, an access node), such as an ATG air interface, to communicate with an aircraft.

Due to a large coverage range of the network device, a propagation delay between the ATG terminal and the network device cannot be ignored. In addition, as a moving speed of the aircraft is high, and a Doppler shift is large, frequency compensation is also required.

Embodiments of the disclosure provide a method for obtaining information. The ATG terminal receives indication information sent by a network device, in which the indication information includes at least one of: first location information of a serving cell; second location information of a neighboring cell; or scheduling offset information. Thus, the ATG terminal may obtain at least one of the first location information of the serving cell, the second location information of the neighboring cell, or the scheduling offset information, so as to autonomously perform time and frequency compensation, thus ensuring communication reliability.

A method and an apparatus for obtaining information provided in the disclosure are described in detail below with reference to the accompanying drawings.

Referring to FIG. 3, FIG. 3 is a flow chart illustrating a method for obtaining information according to an embodiment of the disclosure. As shown in FIG. 3, the method is executed by an ATG terminal and may include, but is not limited to, the following step S31.

At S31, indication information sent by a network device is received, in which the indication information includes at least one of: first location information of a serving cell; second location information of a neighboring cell; or scheduling offset information.

In embodiments of the disclosure, the ATG terminal may receive indication information sent by the network device.

The indication information may indicate the first location information of the serving cell. The serving cell provides network services for the ATG terminal and may be a cell accessed by the ATG terminal.

In some embodiments, the serving cell may be an ATG cell or a non-terrestrial network (NTN) cell.

The indication information may indicate the second location information of the neighboring cell. The neighboring cell may be a cell belonging to a same base station as the serving cell, or may be a cell belonging to a different base station from the serving cell.

The indication information may indicate the scheduling offset information. The scheduling offset information may be *K*_{offset}.

In some embodiments, the ATG terminal receiving the indication information sent by the network device may include receiving the indication information sent by the network device via broadcast.

In some embodiments, the ATG terminal receiving the indication information sent by the network device includes at least one of: receiving a system information block 1 (SIB1) sent by the network device, in which the SIB1 includes the indication information; receiving a SIB2 sent by the network device, in which the SIB2 includes the indication information; or receiving a new SIB sent by the network device, in which the new SIB includes the indication information.

It may be understood that the ATG terminal may receive a SIB19 sent by the network device, and obtains at least one of the first location information of the serving cell, the second location information of the neighboring cell, and the scheduling offset information. However, on one hand, the SIB 19 is an update mechanism based on a validity duration, which is not suitable for the ATG cell because a location of the ATG cell is fixed. On the other hand, the ATG terminal does not need to obtain precise location information of the ATG cell. The number of bits of the location information in the SIB19 is large, and speed information part is unnecessary. Thus, how to reduce the bit overhead of the location information needs to be considered. Further, a propagation delay of the ATG cell is usually less than 1 millisecond, and a value range of the *K*_{offset} from 1 to 1024 milliseconds is not suitable for the ATG cell. Thus, introducing a finer-grained indication needs to be considered.

In embodiments of the disclosure, the ATG terminal may receive the SIB1 sent by the network device, in which the SIB1 includes the indication information. Thus, a bit overhead for indicating the location information may be reduced, and the scheduling offset information may be indicated in a finer granularity.

In embodiments of the disclosure, the ATG terminal may receive the SIB2 sent by the network device, in which the SIB2 includes the indication information. Thus, a bit overhead for indicating the location information may be reduced, and the scheduling offset information may be indicated in a finer granularity.

In embodiments of the disclosure, the ATG terminal may receive the new SIB sent by the network device, in which the new SIB includes the indication information. Thus, a bit overhead for indicating the location information may be reduced, and the scheduling offset information may be indicated in a finer granularity.

For example, the new SIB may be SIB22, SIB23, SIB24, SIB25, and the like.

In some embodiments, in a case where the ATG terminal receives the SIB1, the SIB2 or the new SIB sent by the network device, and the SIB1, the SIB2 or the new SIB includes the second location information of the neighboring cell, the ATG terminal may receive a carrier frequency and a cell identity of the neighboring cell.

In some embodiments, in a case where the neighboring cell is an intra-frequency neighboring cell, the ATG terminal may receive a SIB3 sent by the network device, in which intra-frequency neighboring cell information (IntraFreqNeighCellInfo) of the SIB3 includes the second location information of the neighboring cell. Or, in a case where the neighboring cell is an inter-frequency neighboring cell, the ATG terminal may receive a SIB4 sent by the network device, in which intra-frequency neighboring cell information (IntraFreqNeighCellInfo) of the SIB4 includes the second location information of the neighboring cell.

It needs to be noted that the above embodiments are not exhaustive and are merely illustrative of some embodiments. The above embodiments may be implemented alone or a plurality of embodiments may be implemented in combination. The above embodiments are only illustrative and do not limit the protection scope of the disclosure.

In some embodiments, the first location information and/or the second location information is indicated using an ellipsoid-point manner.

In embodiments of the disclosure, the first location information may be indicated using the ellipsoid-point manner.

In embodiments of the disclosure, the second location information may be indicated using the ellipsoid-point manner.

In some embodiments, the ellipsoid-point manner includes setting a least significant bit of at least one of latitude or longitude to 0; or the ellipsoid-point manner includes indicating only first X most significant bits of latitude and first Y most significant bits of longitude, in which X and Y are positive integers.

In embodiments of the disclosure, the ellipsoid-point manner is setting the least significant bit of at least one of latitude or longitude to 0.

For example, the least significant bits of latitude and longitude are set to 0 to meet accuracy requirements, corresponding to a granularity of approximately X km/m, in which X is a system-agreed value.

In embodiments of the disclosure, the ellipsoid-point manner is indicating only the first X most significant bits of latitude and the first Y most significant bits of longitude, in which X and Y are positive integers.

For example, only the first X most significant bits of latitude and the first Y most significant bits of longitude are indicated, in which X and Y are system-agreed values, for example, X is 15 and Y is 16.

In some embodiments, the scheduling offset information is indicated using at least one of: a flag-based manner; an enumeration value-based manner; an integer-based manner; or a cell specific scheduling offset information element (cellSpecificKoffset IE).

In embodiments of the disclosure, the scheduling offset information may be indicated using the flag-based manner.

In some embodiments, in a case where the indication information includes a flag, it is agreed to adopt a scheduling time offset of X milliseconds/slots/number of orthogonal frequency division multiplexing (OFDM) symbols, in which X may be a decimal or an integer. For example, X is a decimal in 0.1 to 1 (0.1, 0.2, 0.25, 0.4, 0.5, 0.75, 0.8), or X is an integer such as 1, 2, 3, 4, 5, 6, ..., 14, etc. In a case where the indication information does not include the flag, the scheduling time offset is 0.

For example, for a manner using slots, it is agreed that a subcarrier spacing (SCS) is 15 KHz/30 KHz.

In embodiments of the disclosure, the scheduling offset information may be indicated using the enumeration value-based manner.

In some embodiments, the scheduling offset information may be indicated using the enumeration value-based manner. The enumeration values are, for example, 0.1, 0.2, 0.25, 0.4, 0.5, 0.75, 0.8, 1, 2, 3, 4, 5, 6, ..., 14, etc. The unit is milliseconds/slots/number of OFDM symbols. The number of occupied bits is less than or equal to 5 bits, for example, 1 to 5 bits are used.

For example, for the manner using slots, it is agreed that the SCS is 15 KHz/30 KHz.

In embodiments of the disclosure, the scheduling offset information may be indicated using the integer-based manner.

In some embodiments, the scheduling offset information is indicated using the integer-based manner. The integers are, for example, 0 to 100, 0 to 14, or 0 to 15, with the unit being the number of OFDM symbols, or an integer multiple of 0.1 ms/0.25 ms/0.5 ms.

In embodiments of the disclosure, the scheduling offset information may be indicated using the cell specific scheduling offset information element (cellSpecificKoffset IE).

It needs to be noted that the above embodiments are not exhaustive and are merely illustrative of some embodiments. The above embodiments may be implemented alone or a plurality of embodiments may be implemented in combination. The above embodiments are only illustrative and do not limit the protection scope of the disclosure.

In some embodiments, the scheduling offset information is applicable to at least one of following states of the ATG terminal: a connected state; an inactive state; or an idle state.

In embodiments of the disclosure, the scheduling offset information is applicable to a scenario in which the ATG terminal is in the connected state.

For example, in a case where the ATG terminal is in the connected state, the scheduling offset information may be used.

In embodiments of the disclosure, the scheduling offset information is applicable to a scenario in which the ATG terminal is in the inactive state.

For example, in a case where the ATG terminal is in the inactive state, the scheduling offset information may be used.

In embodiments of the disclosure, the scheduling offset information is applicable to a scenario in which the ATG terminal is in the idle state.

For example, in a case where the ATG terminal is in the idle state, the scheduling offset information may be used.

In some embodiments, in a case where the serving cell is an ATG cell, the ATG terminal delays a specific time by a specified duration, in which the specified duration is a round-trip time (RTT) between the ATG terminal and the network device.

The specific time includes at least one of: a start time of a random access contention resolution timer (ra-ContentionResolutionTimer); a time of a random access response window (ra-ResponseWindow); or a start time of a discontinuous reception (DRX) active duration after sending a scheduling request (SR).

In embodiments of the disclosure, in a case where the serving cell accessed by the ATG terminal is an ATG cell, the ATG terminal may delay the start time of the ra-ContentionResolutionTimer by the RTT.

In embodiments of the disclosure, in a case where the serving cell accessed by the ATG terminal is an ATG cell, the ATG terminal may delay the time of the ra-ResponseWindow by the RTT.

In embodiments of the disclosure, in a case where the serving cell accessed by the ATG terminal is an ATG cell, the ATG terminal may delay the start time of the DRX active duration after sending the SR by the RTT.

In embodiments of the disclosure, the network device may be an ATG network device, and the ATG network device may not be regarded as an NTN network device.

In some embodiments or implementations, in the case that no contradiction exists, the steps may be independent, arbitrarily combined, or exchanged in order; optional manners or examples may be arbitrarily combined and may be arbitrarily combined with other implementations or embodiments.

By implementing the embodiments of the disclosure, the ATG terminal receives the indication information sent by the network device, in which the indication information includes at least one of the first location information of the serving cell, the second location information of the neighboring cell, or the scheduling offset information. Thus, the ATG terminal may obtain at least one of the first location information of the serving cell, the second location information of the neighboring cell, or the scheduling offset information, so as to autonomously perform time and frequency compensation, thus ensuring communication reliability.

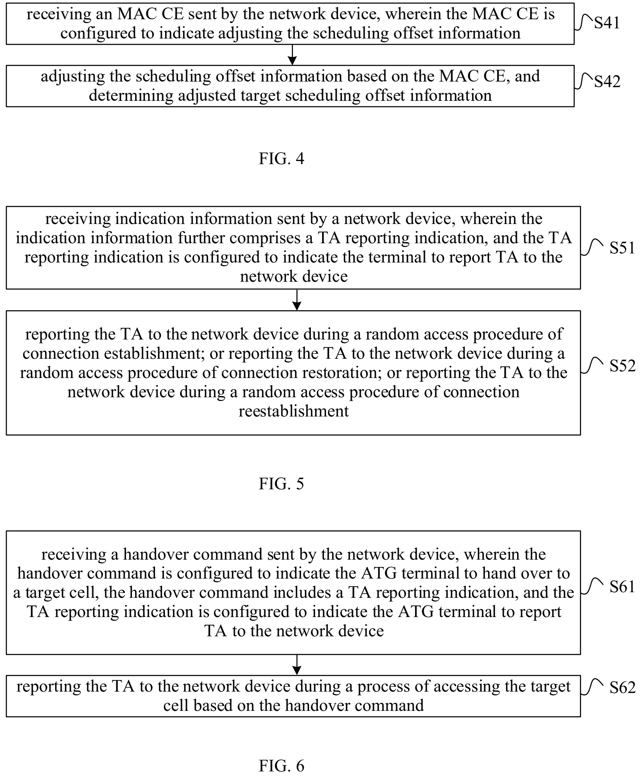

Referring to FIG. 4, FIG. 4 is a flow chart illustrating a method for updating information according to an embodiment of the disclosure. As shown in FIG. 4, the method is performed by an ATG terminal and may include, but is not limited to, the following steps S41 to S42.

At S41, a medium access control (MAC) control element (CE) sent by the network device is received, in which the MAC CE is configured to indicate adjusting the scheduling offset information

At S42, the scheduling offset information is adjusted based on the MAC CE, and adjusted target scheduling offset information is determined.

In embodiments of the disclosure, the ATG terminal may receive the MAC CE sent by the network device, in which the MAC CE is configured to indicate adjusting the scheduling offset information.

In some embodiments, the method for the ATG terminal to obtain the scheduling offset information may include receiving indication information sent from the network device, in which the indication information indicates the scheduling offset information. For the process, reference may be made to the relevant descriptions in the above embodiments, and details are not repeated here.

For relevant descriptions of the indication information and the scheduling offset information, reference may be made to the relevant descriptions in the above embodiments, and details are not repeated here.

In embodiments of the disclosure, after receiving the MAC CE sent by the network device, the ATG terminal may dynamically adjust the scheduling offset information based on the MAC CE, and determine the adjusted target scheduling offset information.

In embodiments of the disclosure, the network device may be an ATG network device, and the ATG network device may not be regarded as an NTN network device.

In some embodiments, the MAC CE may reuse an MAC CE in related art (configured to indicate target scheduling offset information), or may be a newly defined MAC CE. In a case where the MAC CE is a newly defined MAC CE, unit of the MAC CE is a number of OFDM symbols, or a number of slots, on the basis of SCS = 30, 60, 120, or 240 KHz, or the unit is 0.1/0.2/0.25/0.5 milliseconds.

In some embodiments or implementations, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S41 and S42 may be implemented alone or in combination with any other step in the embodiments of the disclosure, for example, in combination with S31 in the embodiments of the disclosure, which is not limited in embodiments of the disclosure.

By implementing the embodiments of the disclosure, the ATG terminal receives the MAC CE sent by the network device, in which the MAC CE is configured to indicate adjusting the scheduling offset information; and adjusts the scheduling offset information based on the MAC CE, and determines the adjusted target scheduling offset information. Thus, the ATG terminal may dynamically update the scheduling offset information, thus ensuring communication reliability.

Referring to FIG. 5, FIG. 5 is a flow chart illustrating a method for timing advance (TA) reporting according to an embodiment of the disclosure. As shown in FIG. 5, the method is executed by an ATG terminal and may include, but is not limited to, the following steps S51 to S52.

At S51, indication information sent by a network device is received, in which the indication information further includes a TA reporting indication, and the TA reporting indication is configured to indicate the terminal to report TA to the network device.

At S52, the TA is reported to the network device during a random access procedure of connection establishment; or the TA is reported to the network device during a random access procedure of connection restoration; or the TA is reported to the network device during a random access procedure of connection reestablishment.

In embodiments of the disclosure, the ATG terminal may receive the indication information sent by the network device, in which the indication information includes the TA reporting indication, and the TA reporting indication is configured to indicate the terminal to report the TA to the network device.

For relevant descriptions of the ATG terminal receiving the indication information sent by the network device, reference may be made to the relevant descriptions in the above embodiments, and details are not repeated here.

In embodiments of the disclosure, the ATG terminal receives the indication information sent by the network device, and in a case where the TA reporting indication included in the indication information is configured to indicate reporting TA to the network device, the ATG terminal may report the TA to the network device during the random access procedure of connection establishment.

In embodiments of the disclosure, the ATG terminal receives the indication information sent by the network device, and in a case where the TA reporting indication included in the indication information is configured to indicate reporting TA to the network device, the ATG terminal may report the TA to the network device during the random access procedure of connection restoration.

In embodiments of the disclosure, the ATG terminal receives the indication information sent by the network device, and in a case where the TA reporting indication included in the indication information is configured to indicate reporting TA to the network device, the ATG terminal may report the TA to the network device during the random access procedure of connection reestablishment.

In embodiments of the disclosure, the network device may be an ATG network device, and the ATG network device may not be regarded as an NTN network device.

In some embodiments or implementations, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S51 and S52 may be implemented alone or in combination with any other step in the embodiments of the disclosure, for example, in combination with S31 and/or S41 to S42 in the embodiments of the disclosure, which is not limited in embodiments of the disclosure.

By implementing the embodiments of the disclosure, the ATG terminal receives the indication information sent by the network device, in which the indication information further includes the TA reporting indication, and the TA reporting indication is configured to indicate the terminal to report TA to the network device; and the ATG terminal reports the TA to the network device during the random access procedure of connection establishment, or reports the TA to the network device during the random access procedure of connection restoration, or reports the TA to the network device during the random access procedure of connection reestablishment. Thus, the ATG terminal may dynamically perform the TA reporting, thus ensuring communication reliability.

Referring to FIG. 6, FIG. 6 is a flow chart illustrating another method for TA reporting according to an embodiment of the disclosure. As shown in FIG. 6, the method is executed by an ATG terminal and may include, but is not limited to, the following steps S61 to S62.

At S61, a handover command sent by the network device is received, in which the handover command is configured to indicate the ATG terminal to hand over to a target cell, the handover command includes a TA reporting indication, and the TA reporting indication is configured to indicate the ATG terminal to report TA to the network device.

At S62, the TA is reported to the network device during a process of accessing the target cell based on the handover command.

In embodiments of the disclosure, the ATG terminal may receive the handover command sent by the network device, in which the handover command is configured to indicate the ATG terminal to hand over to the target cell.

The handover command includes the TA reporting indication, and the TA reporting indication is configured to indicate the ATG terminal to report TA to the network device.

Based on this, the ATG terminal may access the target cell based on the handover command. During the process of accessing the target cell based on the handover command, the ATG terminal may report the TA to the network device based on the TA reporting indication.

In embodiments of the disclosure, the network device may be an ATG network device, and the ATG network device may not be regarded as an NTN network device.

In some embodiments or implementations, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S61 and S62 may be implemented alone or in combination with any other step in the embodiments of the disclosure, for example, in combination with S31 and/or S41 to S42 in the embodiments of the disclosure, which is not limited in embodiments of the disclosure.

By implementing the embodiments of the disclosure, the ATG terminal receives the handover command sent by the network device, in which the handover command is configured to indicate the ATG terminal to hand over to the target cell, the handover command includes the TA reporting indication, and the TA reporting indication is configured to indicate the ATG terminal to report TA to the network device; and the ATG terminal reports the TA to the network device during the process of accessing the target cell based on the handover command. Thus, the ATG terminal may dynamically perform the TA reporting, thus ensuring communication reliability.

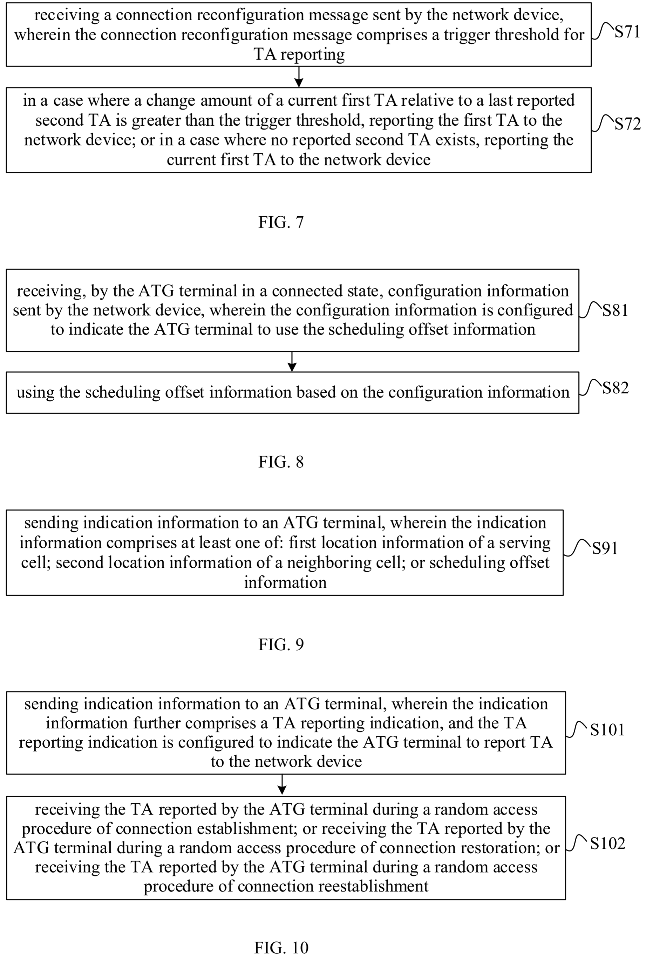

Referring to FIG. 7, FIG. 7 is a flow chart illustrating yet another method for TA reporting according to an embodiment of the disclosure. As shown in FIG. 7, the method is executed by an ATG terminal and may include, but is not limited to, the following steps S71 to S72.

At S71, a connection reconfiguration message sent by the network device is received, in which the connection reconfiguration message includes a trigger threshold for TA reporting.

At S72, in a case where a change amount of a current first TA relative to a last reported second TA is greater than the trigger threshold, the first TA is reported to the network device; or in a case where no reported second TA exists, the current first TA is reported to the network device.

In embodiments of the disclosure, the ATG terminal may receive the connection reconfiguration message sent by the network device, in which the connection reconfiguration message includes the trigger threshold for the TA reporting.

In some embodiments, in a case where the change amount of the current first TA relative to the last reported second TA is greater than the trigger threshold, the ATG terminal may report the first TA to the network device.

In some embodiments, in a case where there is no reported second TA and upon receiving the connection reconfiguration message sent by the network device which includes the trigger threshold for TA reporting, the ATG terminal may directly report the current first TA to the network device.

In embodiments of the disclosure, the network device may be an ATG network device, and the ATG network device may not be regarded as an NTN network device.

In some embodiments or implementations, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S71 and S72 may be implemented alone or in combination with any other step in the embodiments of the disclosure, for example, in combination with S31 and/or S41 to S42 in the embodiments of the disclosure, which is not limited in embodiments of the disclosure.

By implementing the embodiments of the disclosure, the ATG terminal receives the connection reconfiguration message sent by the network device, in which the connection reconfiguration message includes the trigger threshold for the TA reporting; in a case where the change amount of the current first TA relative to the last reported second TA is greater than the trigger threshold, the ATG terminal reports the first TA to the network device; or in a case where no reported second TA exists, the ATG terminal reports the current first TA to the network device. Thus, the ATG terminal may dynamically perform the TA reporting, thus ensuring communication reliability.

Referring to FIG. 8, FIG. 8 is a flow chart illustrating a method for configuring information according to an embodiment of the disclosure. As shown in FIG. 8, the method is executed by an ATG terminal and may include, but is not limited to, the following steps S81 to S82.

At S81, configuration information sent by the network device is received by the ATG terminal in a connected state, in which the configuration information is configured to indicate the ATG terminal to use the scheduling offset information.

At S82, the scheduling offset information is used based on the configuration information.

In embodiments of the disclosure, the ATG terminal in the connected state may receive the configuration information sent by the network device, in which the configuration information is configured to indicate the ATG terminal to use the scheduling offset information. Based on this, the ATG terminal may use the scheduling offset information based on the configuration information.

In some embodiments, in a case where the ATG terminal uses the scheduling offset information based on the configuration information, it is agreed to adopt a scheduling time offset of X milliseconds/slots/number of OFDM symbols, in which X may be a decimal or an integer. For example, X is a decimal in 0.1 to 1 (0.1, 0.2, 0.25, 0.4, 0.5, 0.75, 0.8), or X is an integer such as 1, 2, 3, 4, 5, 6, ..., 14, etc. In a case where the configuration information does not indicate the ATG terminal to use the scheduling offset information, the scheduling time offset indicated by the scheduling offset information is 0.

In some embodiments, the method for the ATG terminal to obtain the scheduling offset information may be receiving indication information sent by the network device, in which the indication information indicates the scheduling offset information. For the process, reference may be made to the relevant descriptions in the above embodiments, and details are not repeated here.

For relevant descriptions of the scheduling offset information, reference may be made to the relevant descriptions in the above embodiments, and details are not repeated here.

In some embodiments, receiving, by the ATG terminal in the connected state, configuration information sent by the network device may include receiving a radio resource control (RRC) reconfiguration message sent by the network device, in which the RRC reconfiguration message includes the configuration information.

In some embodiments, receiving, by the ATG terminal in the connected state, configuration information sent by the network device may include receiving an MAC CE sent by the network device, in which the MAC CE includes the configuration information.

In some embodiments or implementations, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S71 and S72 may be implemented alone or in combination with any other step in the embodiments of the disclosure, for example, in combination with S31 and/or S41 to S42 and/or S51 to S52 and/or S61 to S62 and/or S71 to S72 in the embodiments of the disclosure, which is not limited in embodiments of the disclosure.

By implementing the embodiments of the disclosure, the ATG terminal in the connected state receives the configuration information sent by the network device, in which the configuration information is configured to indicate the ATG terminal to use the scheduling offset information; and the ATG terminal uses the scheduling offset information based on the configuration information. Thus, the ATG terminal may dynamically use the scheduling offset information based on the configuration information of the network device, thus ensuring communication reliability.

Referring to FIG. 9, FIG. 9 is a flow chart illustrating another method for obtaining information according to an embodiment of the disclosure. As shown in FIG. 9, the method is executed by a network device and may include, but is not limited to, the following step S91.

At S91, indication information is sent to an ATG terminal, in which the indication information includes at least one of: first location information of a serving cell; second location information of a neighboring cell; or scheduling offset information.

In embodiments of the disclosure, the network device may send the indication information to the ATG terminal.

The indication information may indicate the first location information of the serving cell. The serving cell provides network services for the ATG terminal, and may be a cell accessed by the ATG terminal.

In some embodiments, the serving cell may be an ATG cell or an NTN cell.

The indication information may indicate the second location information of the neighboring cell. The neighboring cell may be a cell belonging to a same base station as the serving cell, or may be a cell belonging to a different base station from the serving cell.

The indication information may indicate the scheduling offset information. The scheduling offset information may be *K*_{offset}.

In some embodiments, the network device sending the indication information to the ATG terminal may include sending the indication information to the ATG terminal via broadcast.

In some embodiments, the network device sending the indication information to the ATG terminal includes at least one of: sending a SIB1 to the ATG terminal, in which the SIB1 includes the indication information; sending a SIB2 to the ATG terminal, in which the SIB2 includes the indication information; or sending a new SIB to the ATG terminal, in which the new SIB includes the indication information.

It may be understood that the network device may send a SIB19 to the ATG terminal, and indicates at least one of the first location information of the serving cell, the second location information of the neighboring cell, and the scheduling offset information to the ATG terminal. However, on one hand, the SIB19 is an update mechanism based on a validity duration, which is not suitable for the ATG cell because a location of the ATG cell is fixed. On the other hand, the ATG terminal does not need to obtain precise location information of the ATG cell. The number of bits of the location information in the SIB19 is large, and speed information part is unnecessary. Thus, how to reduce the bit overhead of the location information needs to be considered. Further, a propagation delay of the ATG cell is usually less than 1 millisecond, and a value range of the *K*_{offset} from 1 to 1024 milliseconds is not suitable for the ATG cell. Thus, introducing a finer-grained indication needs to be considered.

In embodiments of the disclosure, the network device may send the SIB1 to the ATG terminal, in which the SIB1 includes the indication information. Thus, a bit overhead for indicating the location information may be reduced, and the scheduling offset information may be indicated in a finer granularity.

In embodiments of the disclosure, the network device may send the SIB2 to the ATG terminal, in which the SIB2 includes the indication information. Thus, a bit overhead for indicating the location information may be reduced, and the scheduling offset information may be indicated in a finer granularity.

In embodiments of the disclosure, the network device may send the new SIB to the ATG terminal, in which the new SIB includes the indication information. Thus, a bit overhead for indicating the location information may be reduced, and the scheduling offset information may be indicated in a finer granularity.

For example, the new SIB may be SIB22, SIB23, SIB24, SIB25, and the like.

In some embodiments, in a case where the network device sends the SIB1 or the SIB2 or the new SIB to the ATG terminal, and the SIB1 or the SIB2 or the new SIB includes the second location information of the neighboring cell, then the network device may send a carrier frequency and a cell identity of the neighboring cell to the ATG terminal.

In some embodiments, in a case where the neighboring cell is an intra-frequency neighboring cell, the network device may send a SIB3 to the ATG terminal, in which intra-frequency neighboring cell information (IntraFreqNeighCellInfo) of the SIB3 includes the second location information of the neighboring cell. Or, in a case where the neighboring cell is an inter-frequency neighboring cell, the network device may send a SIB4 to the ATG terminal, in which intra-frequency neighboring cell information (IntraFreqNeighCellInfo) of the SIB4 includes the second location information of the neighboring cell.

It needs to be noted that the above embodiments are not exhaustive and are merely illustrative of some embodiments. The above embodiments may be implemented alone or a plurality of embodiments may be implemented in combination. The above embodiments are only illustrative and do not limit the protection scope of the disclosure.

In some embodiments, the first location information and/or the second location information is indicated using an ellipsoid-point manner.

In embodiments of the disclosure, the first location information may be indicated using the ellipsoid-point manner.

In embodiments of the disclosure, the second location information may be indicated using the ellipsoid-point manner.

In some embodiments, the ellipsoid-point manner includes setting a least significant bit of at least one of latitude or longitude to 0; or the ellipsoid-point manner includes indicating only first X most significant bits of latitude and first Y most significant bits of longitude, in which X and Y are positive integers.

In embodiments of the disclosure, the ellipsoid-point manner includes setting a least significant bit of at least one of latitude or longitude to 0.

For example, the least significant bits of latitude and longitude are set to 0 to meet accuracy requirements, corresponding to a granularity of approximately X km/m, in which X is a system-agreed value.

In embodiments of the disclosure, the ellipsoid-point manner includes indicating only the first X most significant bits of latitude and the first Y most significant bits of longitude, in which X and Y are positive integers.

For example, only the first X most significant bits of latitude and the first Y most significant bits of longitude are indicated, in which X and Y are system-agreed values, for example, X is 15 and Y is 16.

In some embodiments, the scheduling offset information is indicated using at least one of: a flag-based manner; an enumeration value-based manner; an integer-based manner; or a cell specific scheduling offset information element (cellSpecificKoffset IE).

In embodiments of the disclosure, the scheduling offset information may be indicated using the flag-based manner.

In some embodiments, in a case where the indication information includes a flag, it is agreed to adopt a scheduling time offset of X milliseconds/slots/number of OFDM symbols, in which X may be a decimal or an integer. For example, X is a decimal in 0.1 to 1 (0.1, 0.2, 0.25, 0.4, 0.5, 0.75, 0.8), or X is an integer such as 1, 2, 3, 4, 5, 6, ..., 14, etc. In a case where the indication information does not include the flag, the scheduling time offset is 0.

For example, for a manner using slots, it is agreed that a SCS is 15 KHz/30 KHz.

In embodiments of the disclosure, the scheduling offset information may be indicated using the enumeration value-based manner.

In some embodiments, the scheduling offset information may be indicated using the enumeration value-based manner. The enumeration values are, for example, 0.1, 0.2, 0.25, 0.4, 0.5, 0.75, 0.8, 1, 2, 3, 4, 5, 6, ..., 14, etc. The unit is milliseconds/slots/number of OFDM symbols. The number of occupied bits is less than or equal to 5 bits, for example, 1 to 5 bits are used.

For example, for the manner using slots, it is agreed that the SCS is 15 KHz/30 KHz.

In embodiments of the disclosure, the scheduling offset information may be indicated using the integer-based manner.

In some embodiments, the scheduling offset information is indicated using the integer-based manner. The integers are, for example, 0 to 100, 0 to 14, or 0 to 15, with the unit being the number of OFDM symbols, or an integer multiple of 0.1 ms/0.25 ms/0.5 ms.

In embodiments of the disclosure, the scheduling offset information may be indicated using the cell specific scheduling offset information element (cellSpecificKoffset IE).

It needs to be noted that the above embodiments are not exhaustive and are merely illustrative of some embodiments. The above embodiments may be implemented alone or a plurality of embodiments may be implemented in combination. The above embodiments are only illustrative and do not limit the protection scope of the disclosure.

In some embodiments, the network device sends an MAC CE to the ATG terminal, in which the MAC CE is configured to indicate adjusting the scheduling offset information.

In embodiments of the disclosure, the network device may send the MAC CE to the ATG terminal, in which the MAC CE is configured to indicate adjusting the scheduling offset information.

In embodiments of the disclosure, the network device may be an ATG network device, and the ATG network device may not be regarded as an NTN network device.

In some embodiments, the MAC CE may reuse an MAC CE in related art (configured to indicate target scheduling offset information), or may be a newly defined MAC CE. In a case where the MAC CE is a newly defined MAC CE, unit of the MAC CE is a number of OFDM symbols, or a number of slots, on the basis of SCS = 30, 60, 120, or 240 KHz, or the unit is 0.1/0.2/0.25/0.5 milliseconds.

In some embodiments, in a case where the network device does not send the indication information to the ATG terminal via a SIB19, the network device updates the indication information using a system information updating notification mechanism.

In embodiments of the disclosure, the network device sends the indication information to the ATG terminal. In a case where the indication information is not sent to the ATG terminal via the SIB19, for example, in a case where the indication information is sent to the ATG terminal via at least one of the SIB1, the SIB2, or the new SIB, the system information updating notification mechanism may be used to update the indication information.

For example, the indication information may be updated via a paging mechanism.

In some embodiments or implementations, in the case that no contradiction exists, the steps may be independent, arbitrarily combined, or exchanged in order; optional manners or examples may be arbitrarily combined and may be arbitrarily combined with other implementations or embodiments.

By implementing the embodiments of the disclosure, the network device sends the indication information to the ATG terminal, in which the indication information includes at least one of the first location information of the serving cell, the second location information of the neighboring cell, or the scheduling offset information. Thus, the ATG terminal may obtain at least one of the first location information of the serving cell, the second location information of the neighboring cell, or the scheduling offset information, so as to autonomously perform time and frequency compensation, thus ensuring communication reliability.

Referring to FIG. 10, FIG. 10 is a flow chart illustrating yet another method for TA reporting according to an embodiment of the disclosure. As shown in FIG. 10, the method is executed by a network device and may include, but is not limited to, the following steps S101 to S102.

At S101, indication information is sent to an ATG terminal, in which the indication information further includes a TA reporting indication, and the TA reporting indication is configured to indicate the ATG terminal to report TA to the network device.

At S102, the TA reported by the ATG terminal is received during a random access procedure of connection establishment; or the TA reported by the ATG terminal is received during a random access procedure of connection restoration; or the TA reported by the ATG terminal is received during a random access procedure of connection reestablishment.

In embodiments of the disclosure, the network device may send the indication information to the ATG terminal, in which the indication information includes the TA reporting indication, and the TA reporting indication is configured to indicate the terminal to report TA to the network device.

For relevant descriptions of the network device sending the indication information to the ATG terminal, reference may be made to the relevant descriptions in the above embodiments, and details are not repeated here.

In embodiments of the disclosure, the network device sends the indication information to the ATG terminal, and in a case where the TA reporting indication included in the indication information is configured to indicate reporting TA to the network device, the network device may receive the TA reported by the ATG terminal during the random access procedure of connection establishment.

In embodiments of the disclosure, the network device sends the indication information to the ATG terminal, and in a case where the TA reporting indication included in the indication information is configured to indicate reporting TA to the network device, the network device may receive the TA reported by the ATG terminal during the random access procedure of connection restoration.

In embodiments of the disclosure, the network device sends the indication information to the ATG terminal, and in a case where the TA reporting indication included in the indication information is configured to indicate reporting TA to the network device, the network device may receive the TA reported by the ATG terminal during the random access procedure of connection reestablishment.

In embodiments of the disclosure, the network device may be an ATG network device, and the ATG network device may not be regarded as an NTN network device.

In some embodiments or implementations, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S101 and S102 may be implemented alone or in combination with any other step in the embodiments of the disclosure, for example, in combination with S91 in the embodiments of the disclosure, which is not limited in embodiments of the disclosure.

By implementing the embodiments of the disclosure, the network device sends the indication information to the ATG terminal, in which the indication information further includes the TA reporting indication, and the TA reporting indication is configured to indicate the terminal to report TA to the network device; and the network device receives the TA reported by the ATG terminal during the random access procedure of connection establishment; or the network device receives the TA reported by the ATG terminal during the random access procedure of connection restoration; or the network device receives the TA reported by the ATG terminal during the random access procedure of connection reestablishment. Thus, the ATG terminal may dynamically perform the TA reporting, thus ensuring communication reliability.

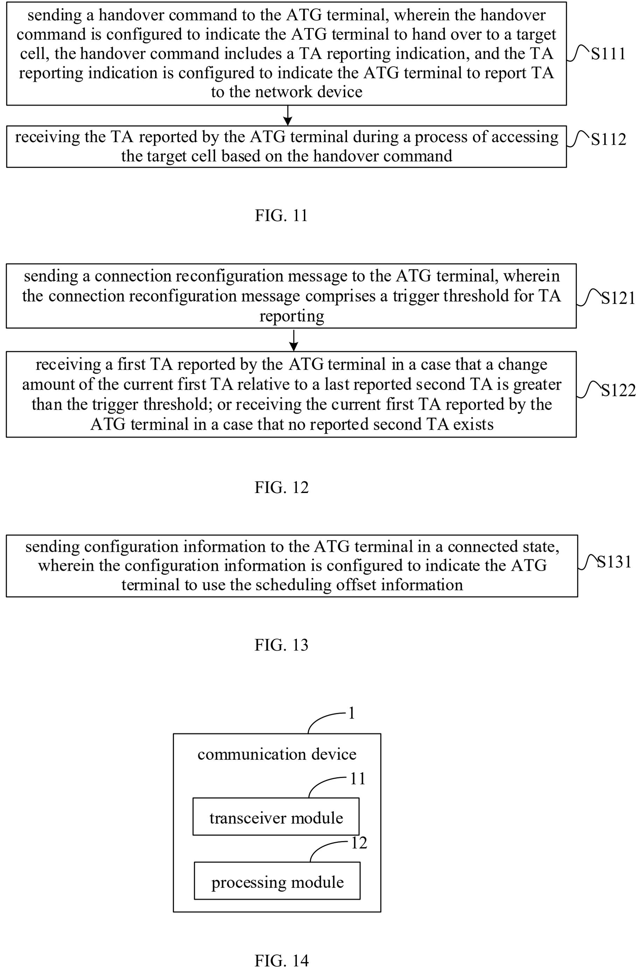

Referring to FIG. 11, FIG. 11 is a flow chart illustrating yet another method for TA reporting according to an embodiment of the disclosure. As shown in FIG. 11, the method is executed by a network device and may include, but is not limited to, the following steps S111 to S112.

At S111, a handover command is sent to the ATG terminal, in which the handover command is configured to indicate the ATG terminal to hand over to a target cell, the handover command includes a TA reporting indication, and the TA reporting indication is configured to indicate the ATG terminal to report TA to the network device.

At S112, the TA reported by the ATG terminal during a process of accessing the target cell based on the handover command is received.

In embodiments of the disclosure, the network device may send the handover command to the ATG terminal, in which the handover command is configured to indicate the ATG terminal to hand over to the target cell.

The handover command includes the TA reporting indication, and the TA reporting indication is configured to indicate the ATG terminal to report TA to the network device.

Based on this, the ATG terminal may access the target cell based on the handover command. The network device may receive the TA reported by the ATG terminal during a process of accessing the target cell based on the handover command.

In embodiments of the disclosure, the network device may be an ATG network device, and the ATG network device may not be regarded as an NTN network device.

In some embodiments or implementations, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S111 and S112 may be implemented alone or in combination with any other step in the embodiments of the disclosure, for example, in combination with S91 in the embodiments of the disclosure, which is not limited in embodiments of the disclosure.

By implementing the embodiments of the disclosure, the network device sends the handover command to the ATG terminal, in which the handover command is configured to indicate the ATG terminal to hand over to the target cell, the handover command includes the TA reporting indication, and the TA reporting indication is configured to indicate the ATG terminal to report TA to the network device; and the network device receives the TA reported by the ATG terminal during the process of accessing the target cell based on the handover command. Thus, the ATG terminal may dynamically perform the TA reporting, thus ensuring communication reliability.

Referring to FIG. 12, FIG. 12 is a flow chart illustrating yet another method for TA reporting according to an embodiment of the disclosure. As shown in FIG. 10, the method is executed by a network device and may include, but is not limited to, the following steps S121 to S122.

At S121, a connection reconfiguration message is sent to the ATG terminal, in which the connection reconfiguration message includes a trigger threshold for TA reporting.

At S122, a first TA reported by the ATG terminal in a case that a change amount of the current first TA relative to a last reported second TA is greater than the trigger threshold is received; or the current first TA reported by the ATG terminal in a case that no reported second TA exists is received.

In embodiments of the disclosure, the network device may send the connection reconfiguration message to the ATG terminal, in which the connection reconfiguration message includes the trigger threshold for the TA reporting.

In some embodiments, in a case where the change amount of the current first TA relative to the last reported second TA is greater than the trigger threshold, the ATG terminal may report the first TA to the network device. Thus, the network device may receive the first TA reported by the ATG terminal in a case that the change amount of the current first TA relative to the last reported second TA is greater than the trigger threshold.

In some embodiments, in a case where there is no reported second TA and upon receiving the connection reconfiguration message sent by the network device which includes the trigger threshold for TA reporting, the ATG terminal may directly report the current first TA to the network device. Thus, the network device may receive the current first TA reported by the ATG terminal in a case that no reported second TA exists.

In embodiments of the disclosure, the network device may be an ATG network device, and the ATG network device may not be regarded as an NTN network device.

In some embodiments or implementations, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S121 and S122 may be implemented alone or in combination with any other step in the embodiments of the disclosure, for example, in combination with S91 in the embodiments of the disclosure, which is not limited in embodiments of the disclosure.

By implementing the embodiments of the disclosure, the network device sends the connection reconfiguration message to the ATG terminal, in which the connection reconfiguration message includes the trigger threshold for the TA reporting; and the network device receives the first TA reported by the ATG terminal in a case that the change amount of the current first TA relative to the last reported second TA is greater than the trigger threshold; or the network device receives the current first TA reported by the ATG terminal in a case that no reported second TA exists. Thus, the ATG terminal may dynamically perform the TA reporting, thus ensuring communication reliability.

Referring to FIG. 13, FIG. 13 is a flow chart illustrating another method for configuring information according to an embodiment of the disclosure. As shown in FIG. 13, the method is executed by a network device and may include, but is not limited to, the following step S131.

At S131, configuration information is sent to the ATG terminal in a connected state, in which the configuration information is configured to indicate the ATG terminal to use the scheduling offset information.

In embodiments of the disclosure, the network device may send the configuration information to the ATG terminal in the connected state, in which the configuration information is configured to indicate the ATG terminal to use the scheduling offset information. Based on this, the ATG terminal may use the scheduling offset information based on the configuration information.

In some embodiments, in a case where the ATG terminal uses the scheduling offset information based on the configuration information, it is agreed to adopt a scheduling time offset of X milliseconds/slots/number of OFDM symbols, in which X may be a decimal or an integer. For example, X is a decimal in 0.1 to 1 (0.1, 0.2, 0.25, 0.4, 0.5, 0.75, 0.8), or X is an integer such as 1, 2, 3, 4, 5, 6, ..., 14, etc. In a case where the configuration information does not indicate the ATG terminal to use the scheduling offset information, the scheduling time offset indicated by the scheduling offset information is 0.

In some embodiments, the method for the ATG terminal to obtain the scheduling offset information may be receiving indication information sent by the network device, in which the indication information indicates the scheduling offset information. For the process, reference may be made to the relevant descriptions in the above embodiments, and details are not repeated here.

For relevant descriptions of the scheduling offset information, reference may be made to the relevant descriptions in the above embodiments, and details are not repeated here.

In some embodiments, sending, by the network device, the configuration information to the ATG terminal in the connected state may include sending an RRC reconfiguration message to the ATG terminal in the connected state, in which the RRC reconfiguration message includes the configuration information.

In some embodiments, sending, by the network device, the configuration information to the ATG terminal in the connected state may include sending an MAC CE to the ATG terminal in the connected state, in which the MAC CE includes the configuration information.

In some embodiments or implementations, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S131 may be implemented alone or in combination with any other step in the embodiments of the disclosure, for example, in combination with S91 and/or S101 to S102 and/or S111 to S112 and/or S121 to S122 in the embodiments of the disclosure, which is not limited in embodiments of the disclosure.

By implementing the embodiments of the disclosure, the network device sends the configuration information to the ATG terminal in the connected state, in which the configuration information is configured to indicate the ATG terminal to use the scheduling offset information. Thus, the ATG terminal may dynamically use the scheduling offset information based on the configuration information of the network device, thus ensuring communication reliability.

To facilitate understanding of the embodiments of the disclosure, an embodiment is provided.

In the embodiment, due to a large coverage range of the network device (for example, an ATG gNB), a propagation delay between the ATG terminal and the ATG gNB cannot be ignored. In addition, because a moving speed of the aircraft is high, a Doppler shift is large, and frequency compensation is also required. By the ATG gNB broadcasting its own location, the ATG terminal may calculate an air interface propagation delay between the ATG terminal and the ATG gNB based on a location of the ATG terminal and a location of the ATG gNB, and compensate for a frequency offset based on speed of the ATG terminal, thus achieving an effect where the ATG terminal autonomously performs time and frequency compensation.

The network device broadcasts location information of an ATG cell (the first location information of the serving cell and/or the second location information of the neighboring cell) and *K*_{offset} information (the scheduling offset information), but how to broadcast the location information and the *K*_{offset} information is not specified. In a case where reusing the location information and *K*_{offset} information of SIB 19, on one hand, the SIB19 is an update mechanism based on a validity duration, which is not suitable for the ATG cell because a location of the ATG cell is fixed. On the other hand, the ATG terminal does not need to obtain precise location information of the ATG cell. The number of bits of the location information in the SIB19 is large, and speed information part is unnecessary. Thus, how to reduce the bit overhead of the location information needs to be considered. Further, a propagation delay of the ATG cell is usually less than 1 millisecond, and a value range of *K*_{offset} from 1 to 1024 milliseconds is not suitable for the ATG cell. Thus, introducing a finer-grained indication needs to be considered.

In addition, in a case where the ATG cell does not belong to an NTN cell, it is necessary to further consider, for the ATG cell, an impact of the terminal -gNB RTT on an MAC timer, a connected state *K*_{offset} update mechanism, and an ATG terminal TA reporting mechanism.

In some embodiments, the ATG terminal receives location information of a serving cell (a base station) (the first location information of the serving cell, the same below), and/or scheduling offset information, and/or location information of a neighboring cell (the second location information of the neighboring cell, the same below) broadcast by a cell.

Optionally, the cell may broadcast the location information of the serving cell and the scheduling offset information via system messages SIB1, a SIB2, or a new SIB, such as SIB22, SIB23, SIB24, SIB25, etc. (currently, NR system messages are defined up to SIB21). The scheduling offset information is *K*_{offset}.

Optionally, the indication information is applicable to a case where the ATG terminal accesses the ATG cell.

Optionally, the indication information broadcast by the cell further includes a TA reporting indication, configured to enable TA reporting during a random access procedure of connection establishment/connection restoration/connection reestablishment.

Optionally, the location information of an intra-frequency neighboring cell is carried in intra-frequency neighboring cell information (IntraFreqNeighCellInfo) of SIB3, and the location information of an inter-frequency neighboring cell is carried in inter-frequency neighboring cell information (InterFreqNeighCellInfo) of SIB4.

Optionally, the location information of the neighboring cell is carried in the new SIB, or in the SIB1/SIB2. In a case where the location information is carried in the SIB1/SIB2 or the new SIB, a carrier frequency and a cell identity of the cell may also be indicated.

In some embodiments, the location information (the first location information of the serving cell and/or the second location information of the neighboring cell) is indicated using an ellipsoid-point manner.

In some embodiments, for the ellipsoid-point manner, the definition in TS 37.355 may be adopted, i.e., the least significant bits of degreesLatitude and degreesLongitude are set to 0 to meet the accuracy requirement corresponds to a granularity of approximately X km/meter, in which X is a system-agreed value.

In some embodiments, for the ellipsoid-point manner, a definition similar to that in TS 37.355 may be adopted, but only the first X MSBs of degreesLatitude and the first Y MSBs of degreesLongitude are indicated, in which X and Y are system-agreed values, for example, X=15, Y=16.

In some embodiments, the scheduling offset information is indicated using one or more of the following manners.

A flag-based manner: in a case where the system message includes the flag, it is agreed to adopt a scheduling time offset of X milliseconds/slots/number of OFDM symbols, in which X may be a decimal or an integer. For example, X is a decimal in 0.1 to 1 (0.1, 0.2, 0.25, 0.4, 0.5, 0.75, 0.8), or X is an integer such as 1, 2, 3, 4, 5, 6, ..., 14, etc. In a case where the flag is not included, the scheduling time offset is 0. For a manner using slots, it is agreed that a SCS is 15 KHz/30 KHz.

An enumeration value-based manner: the enumeration values are, for example, 0.1, 0.2, 0.25, 0.4, 0.5, 0.75, 0.8, 1, 2, 3, 4, 5, 6, ..., 14, etc. The unit is milliseconds/slots/number of OFDM symbols. The number of occupied bits is less than or equal to 5 bits, for example, 1 to 5 bits are used. For the manner using slots, it is agreed that the SCS is 15 KHz/30 KHz.

An integer-based manner: the integers are, for example, 0 to 100, 0 to 14, 0 to 15, with the unit being the number of OFDM symbols, or an integer multiple of 0.1 ms/0.25 ms/0.5 ms.

The scheduling offset information may be indicated using the cell specific scheduling offset information element (cellSpecificKoffset IE) in the related art.

In some embodiments, the scheduling offset information is applicable to one or more of the following states: an idle state, an inactive state, a connected state.

In some embodiments, the ATG terminal receives a Differential *K*_{offset} MAC CE sent by the base station, and the MAC CE may be used for the ATG cell to adjust the *K*_{offset} of the ATG terminal.

Optionally, this manner is applicable to a case where the ATG cell is not regarded as an NTN cell.

Optionally, the ATG terminal dynamically adjusts the *K*_{offset} received from the system message based on the Differential *K*_{offset} MAC CE.

Optionally, the Differential *K*_{offset} MAC CE reuses an existing Differential *K*_{offset} MAC CE, or is a newly defined MAC CE. In a case where the MAC CE is a newly defined MAC CE, unit of the MAC CE is a number of OFDM symbols, or a number of slots, on the basis of SCS = 30, 60, 120, or 240 KHz, or the unit is 0.1/0.2/0.25/0.5 milliseconds.

In some embodiments, in a case where the ATG terminal receives a TA report indication broadcast by the cell, the ATG terminal reports the TA during the random access procedure of connection establishment, connection restoration, or connection reestablishment.

Optionally, this manner is applicable to a case where the ATG cell is not regarded as an NTN cell.

In some embodiments, in a case where the ATG terminal receives the TA report indication in a handover command, the ATG terminal reports the TA when accessing the target cell.

Optionally, this manner is applicable to a case where the ATG cell is not regarded as an NTN cell.

In some embodiments, the base station configures a trigger threshold for TA reporting of the ATG terminal via a connection reconfiguration message. In a case where a change amount of a current TA of the ATG terminal relative to a last reported TA is greater than the threshold, the ATG terminal triggers TA reporting.

Optionally, this manner is applicable to a case where the ATG cell is not regarded as an NTN cell.

In some embodiments, in a case where the ATG terminal in a connected state has not reported TA, and the network configures a TA report threshold, the ATG terminal triggers TA reporting.

Optionally, this manner is applicable to a case where the ATG cell is not regarded as an NTN cell.

In some embodiments, the ATG terminal in a connected state receives a scheduling offset enable indication (configuration information) delivered by the base station. After receiving the message (configuration information), the ATG terminal uses the scheduling offset.

Optionally, in a case where the scheduling offset is enabled, it is agreed to adopt a scheduling time offset of X milliseconds/slots/number of OFDM symbols, in which X may be a decimal or an integer. For example, X is a decimal in 0.1 to 1 (0.1, 0.2, 0.25, 0.4, 0.5, 0.75, 0.8), or X is an integer such as 1, 2, 3, 4, 5, 6, ..., 14, etc. In a case where the scheduling offset is disabled, the scheduling time offset is 0.

Optionally, the scheduling offset enable indication (configuration information) uses an RRC reconfiguration message or an MAC CE.

In some embodiments, in a case where the information broadcast by the base station is not broadcast via SIB19, it is updated via a system information updating notification mechanism, i.e., paging.

In some embodiments, in a case where the ATG terminal accesses an ATG cell, a start time of one or more of the following is delayed by a terminal-gNB RTT: a random access contention resolution timer (ra-contention resolution timer); a random access response window (ra-responsewindow); or a start time of a DRX active duration (DRX active time) after the ATG terminal sends a SR.

Optionally, this manner is applicable to a case where the ATG cell is not regarded as an NTN cell.

It should be noted that relevant descriptions in the embodiments are introduced in detail in the embodiments of FIG. 3 to FIG. 13 above. For details, reference may be made to the detailed descriptions in FIG. 3 to FIG. 13, and details are not repeated here.

In the above embodiments provided in the disclosure, the method provided in the embodiments of the disclosure is introduced from the perspectives of the ATG terminal and the network device, respectively.

Referring to FIG. 14, FIG. 14 is a block diagram illustrating a communication device 1 according to an embodiment of the disclosure. The communication device 1 illustrated in FIG. 14 may include a transceiver module 11 and a processing module. The transceiver module 11 may include a transmitting module and/or a receiving module, the transmitting module is used for realizing a transmitting function, and the receiving module is used for realizing a receiving function, and the transceiver module may realize the transmitting function and/or the receiving function.

The communication device 1 may be an ATG terminal, a device in the ATG terminal, or a device that may be used in conjunction with the ATG terminal. Or, the communication device 1 may be a network device, a device in the network device, or a device that may be used in conjunction with the network device.

In the case that the communication device 1 is configured on the ATG terminal, the device includes the transceiver module 11.

The transceiver module 11 is configured to receive indication information sent by a network device, in which the indication information includes at least one of: first location information of a serving cell; second location information of a neighboring cell; or scheduling offset information.

In some embodiments, the transceiver module 11 is further configured to perform at least one of: receiving a SIB1 sent by the network device, in which the SIB1 includes the indication information; receiving a SIB2 sent by the network device, in which the SIB2 includes the indication information; or receiving a new SIB sent by the network device, in which the new SIB includes the indication information.

In some embodiments, the first location information and/or the second location information is indicated using an ellipsoid-point manner.

In some embodiments, the ellipsoid-point manner includes setting a least significant bit of at least one of latitude or longitude to 0; or the ellipsoid-point manner includes indicating only first X most significant bits of latitude and first Y most significant bits of longitude, in which X and Y are positive integers.

In some embodiments, the scheduling offset information is indicated using at least one of: a flag-based manner; an enumeration value-based manner; an integer-based manner; or a cell specific scheduling offset information element (cellSpecificKoffset IE).

In some embodiments, the scheduling offset information is applicable to at least one of following states of the ATG terminal: a connected state; an inactive state; or an idle state.

In some embodiments, the transceiver module 11 is further configured to receive an MAC CE sent by the network device, in which the MAC CE is configured to indicate adjusting the scheduling offset information.

In some embodiments, the communication device 1 further includes the processing module 12.

The processing module 12 is configured to adjust the scheduling offset information based on the MAC CE, and determine adjusted target scheduling offset information.

In some embodiments, the indication information further includes a TA reporting indication, and the TA reporting indication is configured to indicate the ATG terminal to report TA to the network device.

In some embodiments, the transceiver module 11 is further configured to report the TA to the network device during a random access procedure of connection establishment; or report the TA to the network device during a random access procedure of connection restoration; or report the TA to the network device during a random access procedure of connection reestablishment.

In some embodiments, the transceiver module 11 is further configured to receive a handover command sent by the network device, in which the handover command is configured to indicate the ATG terminal to hand over to a target cell, the handover command includes a TA reporting indication, and the TA reporting indication is configured to indicate the ATG terminal to report TA to the network device; and report the TA to the network device during a process of accessing the target cell based on the handover command.

In some embodiments, the transceiver module 11 is further configured to receive a connection reconfiguration message sent by the network device, in which the connection reconfiguration message includes a trigger threshold for TA reporting.

In some embodiments, the transceiver module 11 is further configured to, in a case where a change amount of a current first TA relative to a last reported second TA is greater than the trigger threshold, report the first TA to the network device; or in a case where no reported second TA exists, report the current first TA to the network device.

In some embodiments, the transceiver module 11 is further configured to receive, by the ATG terminal in a connected state, configuration information sent by the network device, in which the configuration information is configured to indicate the ATG terminal to use the scheduling offset information.

In some embodiments, the processing module 12 is further configured to use the scheduling offset information based on the configuration information.

In some embodiments, the processing module 12 is further configured to, in a case where the serving cell is an ATG cell, delaying a specific time by a specified duration, in which the specified duration is a RTT between the ATG terminal and the network device; in which the specific time includes at least one of: a start time of a random access contention resolution timer (ra-contention resolution timer); a time of a random access response window (ra-responsewindow); or a start time of a DRX active duration after sending a SR.

In the case that the communication device 1 is configured on the network device, the device includes a transceiver module 11 and a processing module 12.

The transceiver module 11 is configured to send indication information to an ATG terminal, in which the indication information includes at least one of: first location information of a serving cell; second location information of a neighboring cell; or scheduling offset information.

In some embodiments, the transceiver module 11 is further configured to send a SIB1 to the ATG terminal, in which the SIB1 includes the indication information; send a SIB2 to the ATG terminal, in which the SIB2 includes the indication information; or send a new SIB to the ATG terminal, in which the new SIB includes the indication information.

In some embodiments, the first location information and/or the second location information is indicated using an ellipsoid-point manner.

In some embodiments, the ellipsoid-point manner includes setting a least significant bit of at least one of latitude or longitude to 0; or the ellipsoid-point manner includes indicating only first X most significant bits of latitude and first Y most significant bits of longitude, in which X and Y are positive integers.

In some embodiments, the scheduling offset information is indicated using at least one of: a flag-based manner; an enumeration value-based manner; an integer-based manner; or a cell specific scheduling offset information element (cellSpecificKoffset IE).

In some embodiments, the transceiver module 11 is further configured to send an MAC CE to the ATG terminal, in which the MAC CE is configured to indicate adjusting the scheduling offset information.

In some embodiments, the indication information further includes a TA reporting indication, and the TA reporting indication is configured to indicate the ATG terminal to report TA to the network device.

In some embodiments, the transceiver module 11 is further configured to receive the TA reported by the ATG terminal during a random access procedure of connection establishment; or receive the TA reported by the ATG terminal during a random access procedure of connection restoration; or receive the TA reported by the ATG terminal during a random access procedure of connection reestablishment.

In some embodiments, the transceiver module 11 is further configured to send a handover command to the ATG terminal, in which the handover command is configured to indicate the ATG terminal to hand over to a target cell, the handover command includes a TA reporting indication, and the TA reporting indication is configured to indicate the ATG terminal to report TA to the network device; and receive the TA reported by the ATG terminal during a process of accessing the target cell based on the handover command.

In some embodiments, the transceiver module 11 is further configured to send a connection reconfiguration message to the ATG terminal, in which the connection reconfiguration message includes a trigger threshold for TA reporting.

In some embodiments, the transceiver module 11 is further configured to receive a first TA reported by the ATG terminal in a case that a change amount of the current first TA relative to a last reported second TA is greater than the trigger threshold; or receive the current first TA reported by the ATG terminal in a case that no reported second TA exists

In some embodiments, the transceiver module 11 is further configured to send configuration information to the ATG terminal in a connected state, in which the configuration information is configured to indicate the ATG terminal to use the scheduling offset information.

In some embodiments, the communication device 1 further includes the processing module 12.

The processing module 12 is configured to, in a case where the indication information is not sent to the ATG terminal via a SIB19, update the indication information using a system information updating notification mechanism.

The specific ways in which the individual modules of the communication device 1 in the above embodiments perform the operations are described in detail in the embodiments related to the method, and are not illustrated in detail herein.

The communication device 1 provided in the above embodiments of the disclosure achieves the same or similar beneficial effects as the method for obtaining information provided in some of the above embodiments, and details are not repeated here.

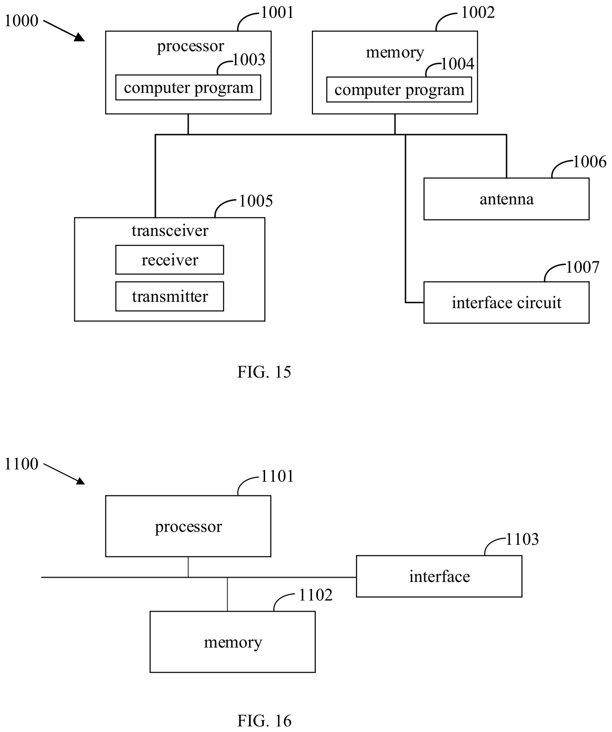

FIG. 15 is a block diagram illustrating another communication device 1000 according to an embodiment of the disclosure. The communication device 1000 may be an ATG terminal, a network device, a chip, a system on chip or a processor that supports the ATG terminal to implement the above method, or a chip, a system on chip or a processor that supports the network device to implement the above method. The communication device 1000 may be configured to implement the methods described in the method embodiments, reference may be made to descriptions in the method embodiments.

The communication device 1000 may include one or more processors 1001. The processor 1001 may include a general purpose processor or a dedicated processor. For example, the processor may be a baseband processor or a central processor. The baseband processor may be configured to process a communication protocol and communication data, and the central processor may be configured to control a communication device (e.g., a network device, a baseband chip, an ATG terminal, a terminal chip, a DU, or CU, etc.), execute a computer program, and process data of the computer program.

Optionally, the communication device 1000 may further include one or more memories 1002 with a computer program 1004 stored thereon. The computer program 1004 is executed by the memory 1002, so that the communication device 1000 performs the method as described in the above method embodiments. Optionally, the memory 1002 may further store data. The communication device 1000 and the memory 1002 may be independently configured or integrated together.

Optionally, the communication device 1000 may further include a transceiver 1005 and an antenna 1006. The transceiver 1005 may be referred to as a transceiving unit, a transceiving machine or a transceiving circuit, which may be configured to achieve a transceiving function. The transceiver 1005 may include a receiver and a transmitter. The receiver may be referred to as a receiving machine or a receiving circuit, etc., for implementing a receiving function; the transmitter may be referred to as a transmitting machine or a transmitting circuit, etc. for implementing a transmitting function.

Optionally, the communication device 1000 may further include one or more interface circuits 1007. The interface circuit 1007 is configured to receive code instructions and transmit the code instructions to the processor 1001. The code instructions are executed by the processor 1001 so that the communication device 1000 performs the method as described in the above method embodiments.

In a case where the communication device 1000 is an ATG terminal, the transceiver 1005 and the processor 1001 are configured to perform the method according to FIG. 3 to FIG. 8.

In a case where the communication device 1000 is a network device, the transceiver 1005 and the processor 1001 are configured to perform the method according to FIG. 9 to FIG. 13.

In a possible implementation, the processor 1001 may include a transceiver configured to implement receiving and transmitting functions. For example, the transceiver may be a transceiving circuit, an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In a possible implementation, the processor 1001 may have a computer program 1003 stored thereon. The computer program 1003 is executed by the processor 1001 so that the communication device 1000 performs the method as described in the above method embodiments. The computer program 1003 may be solidified in the processor 1001, in which case the processor 1001 may be implemented by hardware.

In a possible implementation, the communication device 1000 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), and gallium arsenide (GaAs).

The communication device described in the above embodiments may be an ATG terminal or a network device, but the scope of the communication device described in the disclosure is not limited to this, and a structure of the communication device may not be limited by FIG. 15. The communication device may be a stand-alone device or may be a part of a larger device. For example, the communication device may be the following:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal device, a cellular phone, a wireless device, a handset, a mobile unit, a vehicle-mounted device, a network device, a cloud device, an artificial intelligence device, etc.;
(6) others, and so forth.

In the case that the communication device may be a chip or a system on chip, reference may be made to a block diagram of a chip shown in FIG. 16. FIG. 16 is a block diagram illustrating a chip according to an embodiment of the disclosure.

The chip 1100 includes a processor 1101 and an interface 1103. There may be one or more processors 1101 and there may be a plurality of interfaces 1103.

In a case where the chip is configured to implement functions of the ATG terminal in the embodiments of the disclosure, the interface 1103 is configured to receive code instructions and transmit the code instructions to the processor; and the processor 1101 is configured to execute the code instructions to implement the method in some of the above embodiments.

In a case where the chip is configured to implement functions of the network device in the embodiments of the disclosure, the interface 1103 is configured to receive code instructions and transmit the code instructions to the processor; and the processor 1101 is configured to execute the code instructions to implement the method in some of the above embodiments.

Optionally, the chip 1100 further includes a memory 1102, configured to save necessary computer program and data.

Those skilled in the related art may understand that, various illustrative logical blocks and steps listed in embodiments of the disclosure, may be implemented by electronic hardware, computer software or a combination of the electronic hardware and the computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the disclosure.

An embodiment of the disclosure further provides a system for obtaining information. The system includes the communication device functioning as the ATG terminal, or the communication device functioning as the network device in the aforementioned embodiment of FIG. 14, or the system includes the communication device functioning as the ATG terminal, or the communication device functioning as the network device in the aforementioned embodiment of FIG. 15.

A readable storage medium with instructions stored thereon is further provided in the disclosure. When the instructions are executed by a computer, functions in any one method embodiment are implemented.

A computer program product is further provided in the disclosure. The computer program product implements functions of the above any one method embodiment when executed by a processor.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via a wired (such as a coaxial cable, a fiber optic, a digital subscriber line (DSL)) or a wireless (such as infrared, wireless, microwave) way. The computer-readable storage medium may be any available medium that may be accessed by a computer or a data storage device such as a server and a data center that integrates one or more of the available media. The readable medium may be a magnetic medium (such as a floppy disk, a hard disk, and a magnetic tape), an optical medium (such as a digital video disk (DVD)), or a semiconductor medium (such as a solid state disk (SSD)).

Those skilled in the art may understand that various numbers such as first and second involved in the disclosure are used for distinguishing merely for convenience of description, but not intended to limit the scope of the embodiments of the disclosure, not to indicate an order of precedence.

The phase "at least one" in the disclosure may also be described as one or more, and the phase "a plurality of" may refer to two, three, four or more, which is not limited in the disclosure. In the embodiments of the disclosure, for a kind of technical feature, technical features in the kind are distinguished by "first", "second", "third", "A", "B", "C" and "D", and there is no order of precedence or magnitude between the technical features described in "first", "second", "third", "A", "B", "C" and "D".

Depending on the context, the word "if" and "in case" as used here may be interpreted as "in a case that" or "when" or "in response to determining".

Corresponding relationships indicated by tables in the disclosure may be configured or predefined. A value of information in the tables is only an example, and may be configured as other values, which is not limited in the disclosure. When corresponding relationships between information and parameters are configured, it is not always necessary to configure all corresponding relationships indicated in the tables. For example, in the tables in the disclosure, the corresponding relationships indicated by some rows may not be configured. For another example, appropriate transformations and adjustments, such as splitting and merging, may be made based on the above tables. Names of parameters shown in headers in the tables may be other names understandable by the communication device, and values or representations of the parameters may be other values or representations understandable by the communication device. When the above tables are implemented, other data structures may be used, and for example, arrays, queues, containers, stacks, linear lists, pointers, linked lists, trees, graphs, structures, classes, heaps, or hash tables may be used.

Predefined in the disclosure may be understood as defined, defined in advance, stored, pre-stored, pre-negotiated, pre-configured, solidified, or pre-fired.

Those skilled in the related art may realize that, units and algorithm steps of the examples described in embodiments of the disclosure, may be implemented by electronic hardware or a combination of electronic hardware and computer software. Whether the functions are executed by the hardware or the software depends on a specific application and a design constraint of the technical solution. Those skilled in the art may adopt different methods for each specific application to implement the described functions, but such implementation should not be considered as going beyond the scope of the disclosure.

Those skilled in the art may clearly understand that, for a specific working process of a system, a device and a unit described above, reference may be made to a corresponding process in the above method embodiments, which is not repeated here.

The above are only implementations of the disclosure. However, the protection scope of the disclosure is not limited here. Changes and substitutions that may be easily considered by those skilled in the art shall be contained within the protection scope of the disclosure. Thus, the protection scope of the disclosure shall be subject to the protection scope of claims.

## Claims

1. A method for obtaining information, performed by an air-to-ground (ATG) terminal, comprising:
receiving indication information sent by a network device, wherein the indication information comprises at least one of:
first location information of a serving cell;
second location information of a neighboring cell; or
scheduling offset information.

2. The method according to claim 1, wherein receiving the indication information sent by the network device comprises at least one of:
receiving a system information block 1 (SIB1) sent by the network device, wherein the SIB1 comprises the indication information;
receiving a SIB2 sent by the network device, wherein the SIB2 comprises the indication information; or
receiving a new SIB sent by the network device, wherein the new SIB comprises the indication information.

3. The method according to claim 1 or 2, wherein the first location information and/or the second location information is indicated using an ellipsoid-point manner.

4. The method according to claim 3, wherein
the ellipsoid-point manner comprises setting a least significant bit of at least one of latitude or longitude to 0; or
the ellipsoid-point manner comprises indicating only first X most significant bits of latitude and first Y most significant bits of longitude, wherein X and Y are positive integers.

5. The method according to any one of claims 1 to 4, wherein the scheduling offset information is indicated using at least one of:
a flag-based manner;
an enumeration value-based manner;
an integer-based manner; or
a cell specific scheduling offset information element (cellSpecificKoffset IE).

6. The method according to any one of claims 1 to 5, wherein the scheduling offset information is applicable to at least one of following states of the ATG terminal:
a connected state;
an inactive state; or
an idle state.

7. The method according to any one of claims 1 to 6, further comprising:
receiving a medium access control (MAC) control element (CE) sent by the network device, wherein the MAC CE is configured to indicate adjusting the scheduling offset information; and
adjusting the scheduling offset information based on the MAC CE, and determining adjusted target scheduling offset information.

8. The method according to any one of claims 1 to 7, wherein the indication information further comprises a timing advance (TA) reporting indication, and the TA reporting indication is configured to indicate the ATG terminal to report TA to the network device.

9. The method according to claim 8, further comprising:
reporting the TA to the network device during a random access procedure of connection establishment; or
reporting the TA to the network device during a random access procedure of connection restoration; or
reporting the TA to the network device during a random access procedure of connection reestablishment.

10. The method according to any one of claims 1 to 7, further comprising:
receiving a handover command sent by the network device, wherein the handover command is configured to indicate the ATG terminal to hand over to a target cell, the handover command comprises a TA reporting indication, and the TA reporting indication is configured to indicate the ATG terminal to report TA to the network device; and reporting the TA to the network device during a process of accessing the target cell based on the handover command.

11. The method according to any one of claims 1 to 7, further comprising:
receiving a connection reconfiguration message sent by the network device, wherein the connection reconfiguration message comprises a trigger threshold for TA reporting; and
in a case where a change amount of a current first TA relative to a last reported second TA is greater than the trigger threshold, reporting the first TA to the network device; or in a case where no reported second TA exists, reporting the current first TA to the network device.

12. The method according to any one of claims 1 to 11, further comprising:
receiving, by the ATG terminal in a connected state, configuration information sent by the network device, wherein the configuration information is configured to indicate the ATG terminal to use the scheduling offset information; and
using the scheduling offset information based on the configuration information.

13. The method according to any one of claims 1 to 12, further comprising:
in a case where the serving cell is an ATG cell, delaying a specific time by a specified duration, wherein the specified duration is a round-trip time (RTT) between the ATG terminal and the network device;
wherein the specific time comprises at least one of:
a start time of a random access contention resolution timer (racontentionresolutiontimer);
a time of a random access response window (ra-responsewindow); or
a start time of a discontinuous reception (DRX) active duration after sending a scheduling request (SR).

14. A method for obtaining information, performed by a network device, comprising:
sending indication information to an air-to-ground (ATG) terminal, wherein the indication information comprises at least one of:
first location information of a serving cell;
second location information of a neighboring cell; or
scheduling offset information.

15. The method according to claim 14, wherein sending the indication information to the ATG terminal comprises at least one of:
sending a system information block 1 (SIB1) to the ATG terminal, wherein the SIB1 comprises the indication information;
sending a SIB2 to the ATG terminal, wherein the SIB2 comprises the indication information; or
sending a new SIB to the ATG terminal, wherein the new SIB comprises the indication information.

16. The method according to claim 14 or 15, wherein the first location information and/or the second location information is indicated using an ellipsoid-point manner.

17. The method according to claim 16, wherein
the ellipsoid-point manner comprises setting a least significant bit of at least one of latitude or longitude to 0; or
the ellipsoid-point manner comprises indicating only first X most significant bits of latitude and first Y most significant bits of longitude, wherein X and Y are positive integers.

18. The method according to any one of claims 14 to 17, wherein the scheduling offset information is indicated using at least one of:
a flag-based manner;
an enumeration value-based manner;
an integer-based manner; or
a cell specific scheduling offset information element (cellSpecificKoffset IE).

19. The method according to any one of claims 15 to 18, further comprising:
sending a medium access control (MAC) control element (CE) to the ATG terminal, wherein the MAC CE is configured to indicate adjusting the scheduling offset information.

20. The method according to any one of claims 14 to 19, wherein the indication information further comprises a timing advance (TA) reporting indication, and the TA reporting indication is configured to indicate the ATG terminal to report TA to the network device.

21. The method according to claim 20, further comprising:
receiving the TA reported by the ATG terminal during a random access procedure of connection establishment; or
receiving the TA reported by the ATG terminal during a random access procedure of connection restoration; or
receiving the TA reported by the ATG terminal during a random access procedure of connection reestablishment.

22. The method according to any one of claims 14 to 19, further comprising:
sending a handover command to the ATG terminal, wherein the handover command is configured to indicate the ATG terminal to hand over to a target cell, the handover command comprises a TA reporting indication, and the TA reporting indication is configured to indicate the ATG terminal to report TA to the network device; and receiving the TA reported by the ATG terminal during a process of accessing the target cell based on the handover command.

23. The method according to any one of claims 14 to 19, further comprising:
sending a connection reconfiguration message to the ATG terminal, wherein the connection reconfiguration message comprises a trigger threshold for TA reporting; and
receiving a first TA reported by the ATG terminal in a case that a change amount of a current first TA relative to a last reported second TA is greater than the trigger threshold; or receiving the current first TA reported by the ATG terminal in a case that no reported second TA exists.

24. The method according to any one of claims 14 to 23, further comprising:
sending configuration information to the ATG terminal in a connected state, wherein the configuration information is configured to indicate the ATG terminal to use the scheduling offset information.

25. The method according to any one of claims 14 to 24, further comprising:
in a case where the indication information is not sent to the ATG terminal via a SIB19, updating the indication information using a system information updating notification mechanism.

26. A communication device, comprising:
a transceiver module, configured to receive indication information sent by a network device, wherein the indication information comprises at least one of:
first location information of a serving cell;
second location information of a neighboring cell; or
scheduling offset information.

27. A communication device, comprising:
a transceiver module, configured to send indication information to an air-to-ground (ATG) terminal, wherein the indication information comprises at least one of:
first location information of a serving cell;
second location information of a neighboring cell; or
scheduling offset information.

28. A communication device, comprising a processor and a memory storing a computer program that, when executed by the processor, causes the communication device to implement the method according to any one of claims 1 to 13, or the method according to any one of claims 14 to 25.

29. A communication device, comprising: a processor and an interface circuit;
wherein
the interface circuit is configured to receive code instructions and transmit the code instructions to the processor; and
the processor is configured to execute the code instructions to implement the method according to any one of claims 1 to 13, or the method according to any one of claims 14 to 25.

30. A computer-readable storage medium storing instructions that, when executed, cause the method according to any one of claims 1 to 13, or the method according to any one of claims 14 to 25.
